Europäisches Patentamt

European Patent Office

Office européen des brevets

(19)

(11) Veröffentlichungsnummer: **0 362 384**
**A1**

(12) **EUROPÄISCHE PATENTANMELDUNG**
veröffentlicht nach Art. 158 Abs. 3
EPÜ

(21) Anmeldenummer: 88906218.8

(51) Int. Cl.⁵: **A23B 4/044 , A23B 4/12**

(22) Anmeldetag: 25.03.88

(86) Internationale Anmeldenummer:
**PCT/SU88/00070**

(87) Internationale Veröffentlichungsnummer:
**WO 89/08986 (05.10.89 89/24)**

(43) Veröffentlichungstag der Anmeldung:
**11.04.90 Patentblatt 90/15**

(84) Benannte Vertragsstaaten:
**DE FR SE**

(71) Anmelder: **GOSUDARSTVENNY
PROEKTNO-KONSTRUKTORSKY INSTITUT
RYBOPROMYSLOVOGO FLOTA
"GIPRORYBFLOT"
ul. Gogolya, 18-20
Leningrad, 190000(SU)**

(72) Erfinder: **DULSKAYA, Olga Stepanovna
Pulkovskoe shosse, 13-1-314
Leningrad, 196240(SU)**
Erfinder: **EMSHANOVA, Anna Vasilievna
pr. Suslova, 19-1-235
Leningrad, 198217(SU)**
Erfinder: **VORONA, Valentina Nikolaevna
ul. Malaya Bukharestskaya, 11/60-238
Leningrad, 192288(SU)**
Erfinder: **LETKOVA, Alexandra Ivanovna
pr. Gagarina, 18-4-62
Leningrad, 196211(SU)**

Erfinder: **CHINAKIN, Jury Petrovich
Pulkovskoe shosse, 5-2-83
Leningrad, 196240(SU)**
Erfinder: **KOZYREVA, Stanislava
Konstantinovna
ul. Sofii Kovalevskoi, 13-3-26
Leningrad, 195249(SU)**
Erfinder: **SHKARIN, Alexandr Sergeevich
ul. Ziny Portnovoi, 17-3-127
Leningrad, 198207(SU)**
Erfinder: **ERMOLAEVA, Nina Ivanovna
ul. Akademika Baikova, 7-2-172
Leningrad, 195427(SU)**
Erfinder: **BATALINA, Ekaterina Dmitrievna
pr. Mechnikova, 3-2-55
Leningrad, 195271(SU)**
Erfinder: **ELAGIN, Vladimir Nikolaevich
ul. Nakhimova, 3-1-31
Leningrad, 199266(SU)**

(74) Vertreter: **Ebbinghaus, Dieter et al
Patentanwälte v. Füner, Ebbinghaus, Finck
Mariahilfplatz 2 & 3
D-8000 München 90(DE)**

(54) **VERFAHREN ZUR HERSTELLUNG VON KONSERVEN AUS RÄUCHERFISCHEN.**

(57) Das Verfahren zur Herstellung von Konserven aus Räucherfischen umfaßt eine Vorbereitung der Fische, ein Abpacken diese in rohe Form in Dosen, eine Entfernung des rückständigen technologischen Wassers, eine Entfernung der Oberflächenfeuchtigkeit mittels eines Warmluftstroms bei Temperaturen von 80 bis 90 °C während 0,8 bis 1,1 Minuten und ein Berieseln der Oberflächen der Fische mit einer 1,8 bis 2,1 prozentigen Essigsäurelosung in einem Räucherpräparat, das 1,15 bis 1,3% der Rohfischmasse beträgt, ein Vortrocknen der Fische bei Temperaturen von 70 bis 80 °C während 18 bis 22 Minuten, ein wiederholtes Berieseln der Fische im Räucherpräparat, dessen Menge 1,15 bis 1,3% der Rohfischmasse für eine jede Dose beträgt, ein Backen der Fische bis zu ihrer kulinarischen Gare bei

Temperaturen von 150 bis 170 °C während 18 bis 22 Minuten, ein Einfügen trockenen Salzes, dessen Menge 1,5 bis 2 % der Nettomasse pro Dose beträgt, ein Einfüllen des Öls oder der Öl-Tomaten-Tunke, ein Verschließen der Dosen und ein Sterilisieren.

# VERFAHREN ZUR HERSTELLUNG VON
# KONSERVEN AUS RÄUCHERFISCHEN

## Gebiet der Technik

Die Erfindung bezieht sich auf die fischverarbeitende Industrie und betrifft insbesondere die Herstellung von Konserven aus Räucherfischen, beispielsweise von Konserven "Räucherfisch in Öl".

## Vorhergender Stand der Technik

Mittels des Räucherns werden verschiedenartige Erzeugnisse hergestellt, beispielsweise Konserven aus geräucherten Fischen in Öl, die besonders anziehende Geschmackeigenschaften und ein anspruchsvolles Aussehen aufweisen.

An die Qualität der Räucherfische in den erwähnten Konserven werden bestimmte Anforderungen bezüglich ihres Geschmacks und des äußeres Aussehens gestellt. Die Fische müssen einen ansprechenden, dem geräucherten Produkt eigenen Geschmack und Geruch aufweisen, die Fischhaut muß feingewellt und goldigbraun gefärbt sein, und die Fischleiber und die Fischhaut müssen unversehrt bleiben. Es ist ein Verfahren zur Herstellung von Konserven aus Räucherfischen bekannt ("Sbornik tekhnologicheskikh instruktsij po proizvodstvu rybnnykh konservov i preservov", 1984, Seite 24, 159), das eine Vorbereitung von Fischen zum Räuchern, ein Räuchern, ein Packen der Fische in die Dosen, eine Zugabe von Nahrstoffbeigaben, beispielsweise Öl, ein Verschließen der Dosen und das Sterilisieren umfaßt.

Das Räuchern umfaßt das Vortrocken der Fische, ihre Behandlung mit Holzrauch und das Backen der Fische.

In der Etappe der Vorbereitung der Fische zum Räuchern werden sie nach Größengruppen sortiert, gewaschen und gesalzen.

Große und mittelgroße Fische kommen zum Räuchern im bearbeiteten Zustand.

Kleine Fische mit einer Fischleiblänge nicht über 22 cm werden unbearbeitet geräuchert, und nach dem Räuchern werden die Fischköpfe- und schwänze abgetrennt.

Die Fische werden entweder auf Spitten aufgezogen oder auf Netzen ausgelegt, wobei der Abstand zwischen den Fischleibern gleich 2 bis 2,5 cm gehalten wird, um das Zusammenkleben der Fischleiber miteinander zu verhindern. Die vorbereiteten Fische werden zum Räuchern befördert.

Das Räuchern wird bei Temperatur- und Zeitregimen durchgeführt, die die vollständige Gare der Fische gewährleisten, die durch Abfallen des Fleisches von der Mittelgräte gekennzeichnet wird, wobei das Vortrocknen der Fische bei Temperaturen von 50 bis 70 $^{\circ}$C, die Behandlung mit Holzrauch bei Temperaturen von 80 bis 110 $^{\circ}$C, und das Räuchern bei Temperaturen von 80 bis 180 $^{\circ}$C durchgeführt wird.

Die Regime des Räucherns hängen in bezug auf die Temperatur und Dauer vom Zustand der Fische (Abmessungen der Fischleiber, Fettgehalt in den Fischen u. dgl.m.) ab und werden experimentell nach bekannten Verfahren bestimmt.

Aber das angeführte Verfahren gewährleistet nicht im vollen Maße eine gute Qualität der Fische für die Konservenherstellung.

Das Packen der Fische in Dosen und bei der Herstellung der Konserven aus kleinen Fischen, das Abtrennen der Köpfe und Schwänze wird nach dem Räuchern durchgeführt, wodurch die Fische eine geringe mechanische Festigkeit aufweisen, d.h. leicht zerbröckeln und zerbrechen. Somit kann bei der Bearbeitung (für kleine Fische) und bei dem Abpacken der geräucherten Fische die Unversehrtheit der Fischleiber gestört werden, wodurch die Qualität der Fische beeinträchtigt wird. Hierbei können beschädigte und zerbrochene Fische für die Konservenherstellung nicht verwendet werden.

Außerdem ist dieses Verfahren zur Herstellung von Konserven ziemlich arbeitsaufwendig und läßt sich aus den oben angeführten Gründen nicht mechanisieren.

Bei der Behandlung der Fische mit Rauch ist auch es schwierig, innerhalb eines Loses gleichartige Fertigerzeugnisse zu erreichen. Zum Teil hängt dies damit zusammen, daß die Erzeugung eines in bezug auf die Zusammensetzung gleichartigen und stabilen Rauchs für das Räuchern unmöglich ist, wodurch Unterschiede in der Sorption der räucherenden Komponenten über die zu behandelnden Erzeugnisse herbeigeführt werden. Diese Unterschiede führen zu einer ungleichmäßigen Färbung der Fischhaut, die ebenfalls die Qualität der Fische beeinträchtigt.

Außerdem enthält der Rauch zum Räuchern für den Menschen schädliche chemische Stoffe, solche wie polyzyklische aromatische Kohlenwasserstoffe, unter denen sich 3,4-Benzpyren hervorhebt. Infolgedessen führt das Räuchern mit Rauch zu einer Verschmutzung der zu behandelnden Erzeugnisse und der Umwelt durch die Angeführten Stoffe und ist unerwünscht.

Zur Zeit werden zum Herstellen von Räucherzegnissen rauchfreie Räucherverfahren mit Anwendung von Räucherpräparaten entwickelt.

Es ist ein Verfahren zur Herstellung von Konserven aus Räucherfischen bekannt (V.I.Kurko "Osnovy bezdymnogo kopchenija", 1984, Legkaja o pischevaya promyshlennost (Moskau), Seite 151), das eine Vorbereitung von Fischen zum Räuchern, ein Räuchern, ein Packen der Fische in Dosen, eine Zugabe von Nährstoffzugaben, ein Verschließen der Dosen und ein Sterilisieren umfaßt. Hierbei umfaßt das Räuchern die aufeinanderfolgenden Arbeitsstufen: Vortrocken der Fische, Berieseln der Fische mit dem Räucherpräparat und Backen der Fische.

In der Etappe der Vorbereitung der Fische zum Räuchern werden sie nach Größengruppen sortiert, gewaschen und gesalzen. Große und mittlere Fische werden zum Räuchern in der bearbeiteten Form befördert. Kleine Fische werden unbearbeitet geräuchert und dem Räuchern werden die Köpfe und Schwänze abgetrennt.

Weiterhin werden die Fische entweder auf Fritten aufgezogen oder auf Netzen ausgelegt, wobei der Abstand zwischen den Fischleibern gleich 2 bis 2,5 mm gehalten wird, um das Zusammenkleben der Fischleiber miteinander zu verhindern. Die vorbereiteten Fische werden zum Räuchern befördert.

Während des Räucherns werden die Fische vorgetrocknet, mit dem Räucherpräparat durch Berieseln behandelt, gebacken.

Die Temperatur- und Zeitregime des Räucherns hängen vom Zustand der Fische (dem Fettgehalt, der Größe der Fischleiber u.dgl.m.) ab und werden experimentell nach bekannten Ver-

fahren festgelegt.

Für kleine Fische sind folgende Räucherreigime festgelegt.

Die Fische werden während 10 bis 15 Minuten bei Temperaturen von 80 bis 110 $^{o}$C vorgetrocknet, mit dem Räucherpräparat durch Berieseln während 15 Sekunden behandelt und während 15 bis 20 Minuten bei Temperaturen von 100 bis 120 $^{o}$C gebacken.

Beim Vortrocknen der Fische, das den Anfang der kulinarischen Behandlung der Fische darstellt, werden bei Temperaturen von 80 bis 110 $^{o}$C während 10 bis 15 Minuten die unter der Fischhaut liegenden Schichten des Fischfleisches durchwärmt, die Poren öffnen sich und das die Fische berieselnde Präparat dringt in die Dicke des Fischfleisches ein und setzt sich dort fest. Während des Backens der Fische bei Temperaturen von 100 bis 120 $^{o}$C während 15 bis 20 Minuten wirkt das Räucherpräparat auf das Fischfleisch ein und die Fische garen kulinarisch aus. Hierbei wird der Räucherprozeß dreiviermal wiederholt, um den Fischen den erforderlichen Geschmack und die entsprechende Farbe zu verleihen.

Die Verwendung des Räucherpräparats zum Räuchern schließt bei diesem Verfahren die Behandlung der Erzeugnisse mit Rauch aus und beseitigt folglich die schädliche Wirkung der Rauchbestandteile und die Ungleichartigkeit der Erzeugnisse im Produktionslos, wodurch die Qualität der Fische in den Konserven erhöht wird.

Diese vorliegende Verfahren gewährleistet aber, wie auch das vorhergehende Verfahren, die Qualität der Fische, die für die Konservenherstellung geeignet sind, nicht in vollem Maße, da Störungen der Ganzheit der Fischleiber bei ihrer Bearbeitung (für kleine Fische) und beim Packen in Dosen ebenfalls vorkommen. Außerdem ist daß vorliegende Konservenherstellungsverfahren, wie auch das vorhergehende Verfahren, ziemlich arbeitsaufwendig und läßt eine Mechanisierung des Arbeitsablaufs nicht zu, da in die Dosen geräucherte, mechanisch nicht feste Fische abgepackt werden.

Außerdem werden die Fischleiber während des Räucherns zum Verhindern des Zusammenklebens der Fischleiber miteinander in einem Abstand von 2 bis 2,5 cm voneinander verteilt, wodurch das die Fische berieselnde Präparat teilweise von der Fischoberfläche abläuft.

Aus diesem Grunde wird der Räuchervorgang drei- bis viermal wiederholt, um den Fischen den erforderlichen Geschmack und das erforderliche Aussehen zu verleihen, infolgedessen wächst die Zeit für das Wärmebehandeln der Fische, wodurch entweder ein übermäßiges Eintrocknen der Fische oder ihr Übergaren (in Abhängigkeit von der jeweiligen Fischart) und folglich eine Beeinträchtigung der Fischqualität versacht werden kann.

Offenbarung der Erfindung

Der Erfindung liegt die Aufgabe zugrunde, ein Verfahren zur Herstellung von Konserven aus Räucherfischen zu entwikkeln, bei welchem die Vorbereitung der Fische zum Räuchern und das Räuchern derart durchgeführt werden, daß die Möglichkeit für das Räuchern der Fische unmittelbar in den Dosen gewährleistet und hierdurch die Qualität der Fische für die herzustellenden Konserven durch das Ausschließen des Abpackens der geräucherten Fische in Dosen und die Reduzierung der Zeit für das Räuchern erhöht wird.

Diese Aufgabe wird ausgehend von einem Verfahren zur Herstellung von Konserven aus Räucherfischen durch Vorbereitung der Fische zum Räuchern, Räuchern, Packen der Fische in Dosen, Zugabe von Nährstoffbeigaben, Verschließen der Dosen und Sterilisieren,bei welchem das Räuchern die aufeinanderfolgend durchzuführenden: ein Vortrocknen der Fische, ein Berieseln der Fische mit dem Räucherpräparat und ein Backen der Fische umfaßt, erfindungsgemäß dadurch gelöst, daß vor dem Räuchern der Fische sie in Dosen gepackt werden und die Oberflächenfeuchtigkeit von der Oberseite der Fische entfernt wird, wobei während des Räucherns vor dem Vortrocknen der Fische das Berieseln der Fische mit einer 1,8 bis 2,1 prozentigen Essigsäurelösung im Räucherpräparat durchgeführt wird, und die Gesamtmenge des Räucherpräparats, die in jede Dose gegeben wird, 2,3 bis 2,6% der Rohfischmasse beträgt.

Beim Packen der Fische in die Dosen vor dem Räuchern, wenn die Fische eine mechanische Festigkeit aufweisen, wird die Ganzheit der Fischleiber erhalten, wodurch die Qualität der Fische erhöht wird und alle zu bearbeitenden Fische für die Herstellung der Konserven genutzt werden können, und auch die Arbeitsaufwendigkeit des Verfahrens reduziert.

Bei der Herstellung der Konserven aus kleinen Fischen werden die Köpfe und Schwänze vor dem Abpacken der Fische in die Dosen und somit vor dem Räuchern abgetrennt, was ebenfalls die Unversehrtheit der Fischleiber erhält und die Arbeitsaufwendigkeit des Verfahrens senkt.

Hierbei lassen sich die Arbeitsgänge der Bearbeitung (für kleine Fische) und des Abpackens der Fische in Dosen leicht mechanisieren.

Das Entfernen der Oberflächenfeuchtigkeit von der Oberseite der Fische gewährleistet die gleichmäßige Verteilung des Räucherpräparats über die Oberfläche der in die Dosen gepackten Fische, da es die Verminderung der Konzentration der Räucherpräparatslösung in der Feuchteschicht ausschließt, die ungleichmäßig über die Oberfläche der in die Dosen gepackten rohen Fische verteilt ist.

Beim Räuchern der in Dosen gepackten Fische fließt das sie berieselnde Räucherpräparat von der Fischoberfläche praktisch nicht ab, da die Fische in den Dosen dicht nebeneinander gepackt sind.

Infolgedessen ist es möglich, daß das Räucherpräparat vor Beginn der kulinarischen Behandlung der Fische wirksam wird, was die Möglichkeit gewährleistet, die Behandlung der Fische mit dem Räucherpräparat zweimal während eines Räucherzyklus durchzuführen und hierdurch die Zeit für die Wärmebehandlung des Halberzeugnisses zu verkürzen, was ebenfalls die Qualität der Fische in den herzustellenden Konserven erhöht.

Es ist bekannt, daß die Behandlung der Fische mit einer Essigsäurelösung im Räucherpräparat außer der Verleihung der Geschmackeigenschaften den Fischen die Konsistenz durch Substitution des durch den Essig verdrängten interzellularen Wassers verdichtet. Die Erhöhung der Konsistenz der Fische vermindert das Zusammenkleben der Fische miteinander und gewährleistet die Möglichkeit für das Räuchern der in Dosen gepackter Fische.

Experimentell wurde festgestellt, daß bei der Verwendung einer geringeren als 1,8 prozentigen Konzentration der Essigäurelösung im Räucherpräparat ein Zusammenkleben der Fische miteinander stattfindet, das eine Beeinträchtigung der Qualität der Fische in den herzustellenden Konserven verursacht. Bei einer Konzentration über 2,1% werden die Geschmackeigenschaften der Fische beeinflußt.

Die Erfinder haben experimentell festgestellt, daß beim Räuchern der Fische in Dosen zur Gewinnung von Erzeugnissen mit guten Geschmackeigenschaften und einem guten Aussehen die Gesamtmenge des Räucherpräparats, die in jede Dose hinzugegeben wird, 2,3 bis 2,6 % der Rohfischmasse betragen muß.

Die Erfinder haben auch experimentell festgestellt, daß falls die Menge des Räucherpräparats, die in die Dose gegeben wird, unter 2,3% der Rohfischmasse in der Dose liegt, der Geschmack der Räucherware und der entsprechende Geruch und die Farbe der Fische nicht gewährleistet werden, d.h. die Qualität der Fische in den herzustellenden Konserven wird schlechter.

Falls das Räucherpräparat in größeren Mengen als 2,6 % der Rohfischmasse zugegeben wird, tritt im Geschmack Bitterkeit auf, ein Arzneimittelbeigeschmack wird spürbar, wodurch die Qualität der Fische in den Konserven ebenfalls beeinträchtigt wird.

Es ist zweckmäßig, die Oberflächenfeuchtigkeit von der Oberseite der Fische mittels eines Warmluftstroms mit Temperaturen von 80 bis 90 $^{o}$C während 0,8 bis 1,1 Minuten zu entfernen.

Experimentall wurde festgestellt, daß bei der Behandlung der Fische mit einem Warmluftstrom mit einer Temperatur unter 80 $^{o}$C während 0,8 bis 1,1 Minuten ein ungleichmäßiges Entfernen der Feuchtigkeit stattfindet, und bei der weiteren Behandlung dieser Oberfläche mit dem Räucherpräparat eine ungleichmäßige Färbung der Fische in Erscheinung tritt, d.h. die Qualität der Fische in den Konserven wird schlechter. Bei einer Lufttemperatur über 90°C und bei gleichen Zeitintervallen erfolgt ein Koagulieren der Eiweißstoffe, ein Eintrocknen der Fischhaut; hiernach bläht sich die Fischhaut auf und platzt, wodurch die Qualität der Fische in den Konserven ebenfalls beeinträchtigt wird.

Bei der Verminderung der Zeit für die Behandlung der Fische wird eine Erhöhung der Lufttemperatur erforderlich, wodurch eine Störung der Fischhaut verursacht und folglich die Qualität der Fische in den Konserven verschlechtert wird.

Die Vergrößerung der Zeit bei Erwärmung vergrößert die Dauer des Prozesses, was nicht erwünscht ist.

Es ist zweckmäßig, daß bei dem Räuchern die Fische bei Temperaturen von 70 bis 80 °C während 18 bis 22 Minuten vorgetrocknet und bei Temperaturen von 150 bis 170 °C während 18 bis 22 Minuten gebacken werden.

Die angeführten Grenzwerte sind von den Erfindern experimentell für kleine Fische ermittelt worden.

Experimentell wurde festgetellt, daß beim Durchführen des Vortrocknens bei Temperaturen unter 70°C während 18 bis 22 Minuten eine große Menge Brühe anfällt, die keine Zeit für das Verdampfen hat, in den Dosen zurückbleibt und infolgedessen bei der nachfolgenden Wärmebehandlung die Fische gekocht und nicht gebacken werden, wodurch eine Beeinträchtigung der Qualität der Fische verursacht wird.

Bei Temperaturen über 90°C während 18 bis 22 Minuten beginnen die Fische übermäßig intensiv zu trocknen und bei der anschließenden Wärmebehandlung trocknen die Fische übermäßig ein, es treten Schäden an der Fischhaut in Erscheinung, wodurch die Qualität der Fische in den Konserven ebenfalls beeinträchtigt wird.

Bei der Erwärmung der Fische während einer kurzeren Zeit ist eine Erhöhung der Temperatur erforderlich, die eine Verschlechterung des Aussehens der Fische herbeiführt, d.h. Beschädigungen der Fischhaut und der Ganzheit der Fischleiber.

Die Vergrößerung der Zeit für das Vortrocknen mit gleichzeitiger Senkung der Temperatur verlängert den Räucherprozeß, was ebenfalls unerwünscht ist.

Ebenfalls experimentell wurde festgestellt, daß beim Durchführen des Backens der Fische in den Dosen bei Temperaturen unter 150 $^{o}$C während 18 bis 22 Minuten eine große Menge der Brühe anfallen wird, und die Fische gegart werden, und bei Temperaturen über 170 $^{o}$C während 18 bis 22 Minuten die Fische einzutrocknen beginnen und die Fischhaut einschrumpft, infolgedessen beginnt die Haut sich zu blähen und zu platzen, wodurch die Qualität der Fische im den Konserven ebenfalls beeinträchtigt wird.

Beim Vermindern der Zeit für das Backen wächst die Temperatur, auf die die Fische erwärmt werden, was ebenfalls Störungen an der Fischhaut herbeiführt und somit das Aussehen der Fische verschlechtert.

Bei der Vergrößerung der Zeit für das Backen wird die Dauer des technologischen Zyklus größer, was ebenfalls unerwünscht ist.

Beste Ausführungsvariante der Erfindung

Das Verfahren wird folgendermaßen durchgeführt. Die Fische werden für das Räuchern vorbereitet. Zu diesem Zweck werden die Fische bearbeitet, die bearbeiteten Fischleiber werden in Dosen gepackt, das rückständige technologische Wasser wird aus den Dosen entfernt. Die rohen Fische weisen eine mechanische Festigkeit auf, wodurch beim Packen der Fische in Dosen die Fischleiber unversehrt bleiben, die Qualität der Fische erhöht wird, die Gesamtmasse der zu verarbeitenden Fische für die Herstellung der Konserven genutzt werden kann, die Arbeitsaufwendigkeit des Verfahrens kleiner wird und Möglichkeiten für die Mechanisierung des Abpackens der Fische in die Dosen gewährleistet werden.

Bei der Herstellung der Konserven aus kleinen Fischen wird das Abtrennen der Fischköpfe- und schwänze ebenfalls vor dem Räuchern, und zwar vor dem Packen der Fische in Dosen durchgeführt, wodurch die Qualität der Fische für die herzustellenden Konserven ebenfalls erhöht wird.

Die in Dosen gepackten Fische weisen einen Wasserüberzug auf, der ungleichmäßig über die Fischoberfläche verteilt ist. Um der Herabsetzung der Konzentration des Räucherpräparats, mit dem die Fische berieselt werden, in der erwähnten Wasserschicht und seiner Adhäsion vorzubeugen, wird eine Entfernung der Oberflächenfeuchtigkeit von der Oberseite der in Dosen gepackten Fische durchgeführt.

Das Entfernen der Oberflächenfeuchtigkeit wird mittels eines Warmluftstroms mit Temperaturen von 80 bis 90 $^{\circ}$C während 0,8 bis 1,1 Minuten durchgeführt. Hierbei wird eine gleichmäßig trockene Oberfläche der Oberseite der Fische gewährleistet. Bei einer anderen Ausführungsvariante der Erfindung kann die Entfernung der Oberflächenfeuchtigkeit mittels Infrarotstrahlen erfolgen.

Die auf dieses Art und Weise für das Räuchern vorbereiteten Fische werden zur Räucherstation befordert. In der ersten Etappe des Räucherns werden die Fische mit 18 bis 21 prozentiger Essigsäurelösung im Räucherpräparat berieselt. Die Menge des Räucherpräparats beträgt 1,15 bis 1,3 % der Rohfischmasse.

Hierbei verteilt sich das die Fische berieselnde Räucherpräparat auf der trocknen Oberfläche der Fischoberseite praktisch gleichmäßig, wodurch die gleichmäßige Färbung der Fische und die Erhöhung ihrer Qualität gefördert wird.

Die Behandlung der Fische mit der Essigsäurelösung im Räucherpräparat verleiht den Fischen die Geschmackeigenschaften und verhindert außerdem das Zusammenkleben der Fischleiber miteinander und gewährleistet folglich die Möglichkeit für das Räuchern von in Dosen gepackten Fischen.

Da außerdem die Fische in den Dosen dicht negebeinander gepackt sind, fließt das Räucherpräparat von der Fischoberfläche praktisch nicht ab, wodurch die Möglichkeit gewährleistet wird, die Berieselung der Fische mit dem Räucherpräparat vor dem Vortrocknen der Fische und folglich die Behandlung der Fische mit dem Räucherpräparat zweimal während eines Räucherzyklus durchzuführen und somit die Zeit für die Wärmebehandlung der Fische herabzusetzen, wodurch die Qualität der in den herzustellenden Konserven zusätzlich erhöht wird.

Als Räucherpräparat kann eines der bekannten Präparate, beispielsweise "Vakhtol" und andere verwendet werden (V.P.Kurko "Osnovy bezdymnogo kopchenija", 1984, Legkaya i pischevaya promyshlennost (Moskau), Seiten 6 bis 31).

Nach dem Berieseln der Fischoberfläche mit der Essigsäurelösung im Räucherpräparat werden die Fische vorgetrocknet.

Die Temperatur- und Zeitregime für den Räuchern für kleine Fische sind von den Erfindern experimentell festgestellt.

Das Vortrocknen der Fische wird bei Temperaturen von 70 bis 90 °C während 18 bis 22 Minuten durchgeführt. Während des Vortrocknens, das den Begin der kulinarischen Behandlung der Fische darstellt, werden die oberen Schichten des Fischfleisches durchwärmt und es erfolgt das Fixieren des Räucherpräparats. Die Fische bekommen eine schwache strohgelbe Farbe. Der Geschmack der Räucherwaren ist nicht stark ausgeprägt.

Nach dem Vortrocknen wird das wiederholte Berieseln der Fische mit dem Räucherpräparat durchgeführt. Die Menge des Räucherpräparats beträgt 1,15 bis 1,3 % der Rohfischmasse für jede Dose. Hierbei beträgt die Gesamtmasse des Räucherpräparats, die zur Gewinnung der Fische mit guten Geschmackeigenschaften und mit einem ansprechenden Aussehen jeder Dose zugegeben wird, 2,3 bis 2,6 % der Rohfischmasse in der Dose.

Nach der Behandlung der Fische mit dem Räucherpräparat wird das Backen der Fische bis zur kulinarischen Gare bei Temperaturen von 170 bis 180 °C während 18 bis 22 Minuten durchgeführt.

Während des Backens offenbaren sich die Eigenschaften des Räucherpräparats.

Mit dem Backen der Fische wird der Räucherzyklus abgeschlossen. Infolge der angeführten Behandlung bekommen die Fische eine gleichmäßige dunkelgoldige Färbung, den Geschmack und den Geruch von Räucherwaren und die Unversehrtheit der Fischleiber und der Fischhaut bleibt erhalten.

Hiernach wird in jede Dose trockenes Salz eingebracht, dessen Menge pro Dose 1,5 bis 2,0 % der Nettomasse beträgt, und beispielsweise Öl eingefüllt. Bei einer anderen Ausfüh-

rungsvariante werden die Fische mit Öl-Tomaten-Tunke übergossen. Die Dosen werden verschlossen und sterilisiert. Die Zugabe von Salz, Öl sowie das Verschließen der Dosen und das Sterilisieren dieser Dosen erfolgt entsprechend den technologischen Vorschriften für die Herstellung von Fischkonserven ("Zbornik tekhnologicheskikh instruktsij po proizvodstvu rybnykh konservov i preservov", 1984).

Das Verfahren wird anhand des nachfolgenden Beispiels erläutert.

Beispiel. Verfahren zur Herstellung von Konserven aus kleinen Räucherfischen in Öl.

In der ersten Etappe wird die Vorbereitung der Fische zum Räuchern durchgeführt. Zu diesem Zweck werden die Fische nach Größengruppen sortiert, gewaschen, ausgenommen und die Köpfe und Schwänze werden abgetrennt. Die bearbeiteten Fische werden in rohem Zustand in Dosen mit einem Rauminhalt von 160 cm$^3$ gepackt. Nach dem Entfernen des rückständigen technologischen Wassers aus den Dosen wird das Oberflächenwasser von der Oberseite der in die Dosen gepackten Fische entfernt. Das Entfernen des Oberflächenwassers wird mit einem Warmluftstrom durchgeführt. Weiterhin kommen die Fische zur Räucherstation.

Die Oberfläche der Fische wird mit der Essigsäurelösung im Räucherpräparat berieselt, vorgetrocknet, wiederholt mit dem Raucherpräparat berieselt und durchgebacken. Hiernach wird in jede Dose trocknes Salz eingefüllt und eine solche Menge Öl hinzugesetzt, daß die Nettomasse der Dosen 150 g gleich wird. Die einzufüllende Salzmenge beträgt 1,8 % der Nettomasse der jeweiligen Dose. Anschließend werden die Dosen verschlossen und sterilisiert.

Die konkreten Regime und Kenndaten des Verfahrens für die Verhältnisse des angeführten Beispiels sind in Tabelle I angeführt.

Aus der Tabelle ist ersichtlich, daß die Verwendung des erfindungsgemäßen Verfahrens für die Herstellung von Konserven aus Räucherfischen bei den angeführten konkreten Regimen und Kenndaten des vorliegenden Verfahrens eine hohe Qualität der Fische in den herzustellenden Konserven gewährleistet. Alle behandelten Fische weisen einen angenehmen, den Räucherwaren eigenen Geschmack und Geruch auf, die Fischhaut ist feingewelt und goldigbraun gefärbt, die Unversehrtheit der Fischleiber und der Fischhaut bleibt erhalten, die Fischleiber lassen sich leicht voneinander trennen.

Aus der Tabelle ist ebenfalls ersichtlich, daß ein Überschreiten der angeführten Grenzwerte der Regime und Kennwerte des vorliegenden Verfahrens eine Beeinträchtigung entweder der Geschmackeigenschaften der Fische oder des Aussehens der Fische verursacht, d.h. eine Herabsetzung der Qualität der Fische in den herzustellenden Konserven herbeiführt.

Tabelle I

| Lfd. Nr. | Art des Räucher- präparats | Entfernen der Feuchtigkeit | | Essigge- halt im Räucher- präparat, % | Prozentanteil des Räucher- präparats be- zogen auf die Fischmasse |
|---|---|---|---|---|---|
| | | Tempe- ratur, °C | Zeit, s | | |
| I | 2 | 3 | 4 | 5 | 6 |
| I | "Vakhtol" | 85 | 0,9 | 1,8 | 2,5 |
| 2 | -"- | 80 | 1,1 | 2,0 | 2,6 |
| | -"- | 90 | 1,0 | 2,0 | 2,3 |
| | -"- | 90 | 0,8 | 2,1 | 2,4 |
| 3 | -"- | 70 | 1,6 | 1,6 | 2,0 |
| 4 | -"- | 110 | 0,8 | 2,3 | 2,9 |

Fortsetzung der Tabelle I

| Lfd. Nr. | Vortrocknen | | Durchbacken | | Organoleptik |
|---|---|---|---|---|---|
| | Temperatur, °C | Zeit, s | Temperatur, °C | Zeit, s | |
| I | 7 | 8 | 9 | 10 | 11 |
| 1 | 80 | 18 | 165 | 20 | Strömlinge Die Fischoberfläche ist dunkelgoldig, fein gewellt, gleichmäßig gefärbt. Beim Herauslegen aus der Dose zerfallen die Fischleiber nicht und lassen sich leicht voneinander trennen. Geruch und Geschmack sich angenehm und der Räucherware eigen. |
| 2 | 70 | 20 | 150 | 22 | dasselbe |
| | 75 | 22 | 170 | 18 | annähernd dasselbe |
| | 70 | 18 | 170 | 22 | annähernd dasselbe |
| 3 | 60 | 25 | 150 | 25 | Die Oberfläche der Fische ist hellgoldenfarbig. Die Menge der Brühe vergrößert sich bis auf (10-15) g, aus diesem Grunde kleben die Fischleiber zusammen (Unzureichende Essige, Oberfläche unzulänglich fixiert). Beim Herauslegen zerbrechen die Fischleiber und lassen sich schlecht voneinander trennen. |
| 4 | 90 | 15 | 180 | 15 | Die Oberfläche der Fische ist braun mit großen Wellen und Brandblasen. Der Geruch und Geschmack der Räucherwaren sind intensiv ausgeprägt. Die Fische schmecken nach Säure mit einem Arzneimittelbeigeschmack. Die Konsistenz ist hoch, trocken bis zur Härte. |

Fortsetzung der Tabelle I

| I | 2 | 3 | 4 | 5 | 6 |
|---|---|---|---|---|---|
| 5 | "Vakhtol" | 85 | 1,0 | 2,0 | 2,3 |
| 6 | _"_ | 85 | 1,0 | 1,8 | 2,2 |
| 7 | _"_ | Ausgang — | — | — | Berieselung 15 s lang |
| 8 | _"_ | — | — | — | _"_ |

Fortsetzung der Tabelle I

| I | 7 | 8 | 9 | 10 | 11 |
|---|---|---|---|---|---|
| 5 | 85 | 20 | 170 | 20 | Kleine Maräne |
| | | | | | Die Oberfläche der Fische ist dunkelgoldig, feingewellt, gleichmäßig. Geschmack und Geruch sind angenehm und der Räucherware eigen. Die Konsistenz ist fein, saftig. Die Fischleiber sind ganz und zerbrechen nicht beim Herauslegen aus den Dosen. |
| 6 | 85 | 20 | 170 | 20 | Stöcker.Kleinfische Gr.III |
| | | | | | Die Oberfläche der Fische ist goldenbraun, feinwellig, eben. Die Fischleiber sind unversehrt und zerbrechen nicht beim Herauslegen aus den Dosen. Geruch und Geschmack sind angenehm und den Räucherwaren eigen, ohne störende Anzeichen. |
| 7 | 100 | 13 | 110 | 18 | Die Oberfläche der Fische ist bleich und kann ungleichmäßig gefärbt sein. Geruch und Geschmack schwach. Beim Herauslegen aus den Dosen können die Fischleiber zerbrechen und zerbröckeln. |
| 8 | 100 | 13 | 110 | 18 | Die Oberfläche der Fische ist dunkelgolden, weist eine gleichmäßige Färbung auf, ist feingewellt, Geruch und Geschmack sind angenehm und den Räucherwaren eigen. Risse in den Muskulgeweben sind infolge übermäßigen Kochens bzw. übermäßigen Eintrocknens möglich, d.h. die Unversehrtheit der Fischleiber kann gestört sein. |

Industrielle Anwendbarkeit

Am vorteilhaftesten das erfindungsgemäße Verfahren kann in der Fischwarenindustrie zur Konservenherstellung aus Räucherfischen, insbesondere zur Konservenherstellung aus kleinen Räucherfischen in Öl.

PATENTANSPRÜCHE:

1. Verfahren zur Herstellung von Konserven aus Räucherfischen durch Vorbereitung der Fische zum Räuchern, Räuchern, Packen der Fische in Dosen, Zugabe von Nährstoffbeigaben, Verschließen der Dosen und Sterilisieren, wobei das Räuchern die aufeinanderfolgend durchzuführenden: ein Vortrocknen der Fische, ein Berieseln der Fische mit dem Räucherpräparat und ein Backen der Fische umfaßt, d a d u r c h   g e k e n n - z e i c h n e t , daß vor dem Räuchern die Fische in Dosen gepackt werden und die Oberflächenfeuchtigkeit von der Oberseite der Fische entfernt wird, wobei während des Räucherns vor dem Vortrocknen der Fische ein vorläufiges Berieseln der Fische mit 1,8 bis 2,1 % Essigsäurelösung im Räucherpräparat durchgeführt wird, und die Gesamtmenge des Räucherpräparats, die in jede Dose gegeben wird, 2,3 bis 2,6 % der Rohfischmasse in der Dose beträgt.

2. Verfahren nach Anspruch I, d a d u r c h   g e k e n n - z e i c h n e t , daß die Oberflächenfeuchtigkeit von der Oberseite der Fische mit einem Warmluftstrom mit Temperaturen von 80 bis 90 $^{\circ}$C während 0,8 bis 1,1 Minute entfernt wird.

3. Verfahren nach Anspruch I oder 2, d a d u r c h g e k e n n z e i c h n e t , daß während des Räucherns die Fische bei Temperaturen von 70 bis 80 $^{\circ}$C während 18 bis 22 Minuten vorgetrocknet und bei Temperaturen von 150 bis 170$^{\circ}$C während 18 bis 22 Minuten gebacken werden.

# INTERNATIONAL SEARCH REPORT

## I. CLASSIFICATION OF SUBJECT MATTER (if several classification symbols apply, indicate all) *

According to International Patent Classification (IPC) or to both National Classification and IPC

IPC[4]    A23B 4/04,4/12

## II. FIELDS SEARCHED

### Minimum Documentation Searched [7]

| Classification System | Classification Symbols |
|---|---|
| IPC[4] | A23B 4/04,4/12 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 286489 (A. I. Barman) 21 December 1970 (21.12.70) see column 1,lines 13-18 | 1 |
| A | SU, A1, 1316626 (Dalnevostochny tekhnichesky institut rybnoi promyshlennosti i khozyaistva) 15 June 1987 (15.06.87) see column 1,lines 39-58,column 2,lines 1-30 | 1 |
| A | SU, A1, 1012863 (Vsesojuzny nauchno-issledovatelsky institut morskogo rybnogo khozyaistva i okeanografii) 23 April 1983 (23.04.83) see column 1,lines 39-54 | 1 |
| A | SU, A1, 556775 (Ukrainsky nauchno-issledovatelsky institut myasnoi i molochnoi promyshlennosti) 04 July 1977 (04.07.77) see column 2,lines 3-15 | 1,2 |
| A | SU, A1, 322171 (Kuibyshevsky ryboobrabatyvajuschny zavod) 04 February 1972 (04.02.72) see column 2,lines 17-30 | 1-3 |

-----------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 November 1988 (25.11.88) | 22 December 1988 (22.12.88) |
| International Searching Authority<br><br>ISA/SU | Signature of Authorized Officer |

Form PCT/ISA/210 (second sheet) (January 1985)